# EUROPÄISCHE PATENTSCHRIFT

(11) **EP 3 501 140 B1**
(45) Veröffentlichungstag und Bekanntmachung des Hinweises auf die Patenterteilung: **26.08.2020**
(21) Anmeldenummer: 16778729.0
(22) Anmeldetag: 29.09.2016
(51) Int. Cl.: H04L 12/715, G05B 19/418, H04L 12/24, H04L 12/819, H04L 12/813, H04L 12/823, H04L 12/70

(54) **VERFAHREN ZUM BETRIEB EINES MEHRERE KOMMUNIKATIONSGERÄTEN UMFASSENDEN KOMMUNIKATIONSNETZES EINES INDUSTRIELLEN AUTOMATISIERUNGSSYSTEMS UND STEUERUNGSEINHEIT**
METHOD FOR OPERATING AN INDUSTRIAL AUTOMATION SYSTEM COMMUNICATION NETWORK COMPRISING A PLURALITY OF COMMUNICATION DEVICES, AND CONTROL UNIT
PROCÉDÉ POUR FAIRE FONCTIONNER UN RÉSEAU DE COMMUNICATION D'UN SYSTÈME D'AUTOMATISATION INDUSTRIEL COMPRENANT PLUSIEURS APPAREILS DE COMMUNICATION, ET UNITÉ DE COMMANDE

(43) Veröffentlichungstag der Anmeldung: 26.06.2019
(73) Patentinhaber: Siemens Aktiengesellschaft, 80333 München (DE)
(72) Erfinder: SAKIC, Ermin, 81379 München (DE)
(86) Internationale Anmeldenummer: PCT/EP2016/073247
(87) Internationale Veröffentlichungsnummer: WO 2018/059690

(56) Entgegenhaltungen:
- WO-A1-2016/033979
- US-A1- 2015 139 238

## Beschreibung

Industrielle Automatisierungssysteme dienen zur Überwachung, Steuerung und Regelung von technischen Prozessen, insbesondere im Bereich Fertigungs-, Prozess- und Gebäudeautomatisierung, und ermöglichen einen Betrieb von Steuerungseinrichtungen, Sensoren, Maschinen und industriellen Anlagen, der möglichst selbständig und unabhängig von menschlichen Eingriffen erfolgen soll. Aufgrund einer ständig steigenden Bedeutung von Informationstechnik für Automatisierungssysteme, die zahlreiche vernetzte Steuerungs- bzw. Rechnereinheiten umfassen, gewinnen Verfahren zur zuverlässigen Bereitstellung von über ein Automatisierungssystem verteilten Funktionen für eine Bereitstellung von Überwachungs-, Steuerungs- und Regelungsfunktionen verstärkt an Bedeutung.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Dies verursacht eine zusätzliche Auslastung von Kommunikationsverbindungen des industriellen Automatisierungssystems, was zu weiteren Systemstörungen oder -fehlern führen kann. Außerdem können nicht oder nicht vollständig übermittelte Nachrichten beispielsweise einen Übergang oder Verbleib eines industriellen Automatisierungssystems in einen sicheren Betriebszustand verhindern. Dies kann schließlich zu einem Ausfall einer kompletten Produktionsanlage und einem kostspieligen Produktionsstillstand führen. Eine besondere Problematik resultiert in industriellen Automatisierungssystemen regelmäßig aus einem Meldungsverkehr mit verhältnismäßig vielen, aber relativ kurzen Nachrichten, wodurch obige Probleme verstärkt werden.

Software Defined Networking zielt auf eine Virtualisierung von Kommunikationsnetzfunktionen ab, indem Kommunikationsgeräte wie Router oder Switche funktionell in Control Plane und Data Plane zugeordnete Komponenten unterteilt werden. Die Data Plane umfasst Funktionen bzw. Komponenten zur Port-weisen Weiterleitung von Datenpaketen bzw. -rahmen. Die Control Plane umfasst hingegen Management-Funktionen zur Steuerung der Weiterleitung bzw. der Komponenten der Data Plane. Mit OpenFlow ist beispielsweise ein Standard für Software-implementierte Control Planes definiert. Eine Abstraktion von Hardware als virtuelle Services ermöglicht einen Verzicht auf eine manuelle Konfiguration der Hardware, insbesondere indem eine programmierbare, zentrale Steuerung von Netzverkehr geschaffen wird.

Aus US 2013/268686 A1 ist ein Verfahren zum Senden einer Anforderung eines Verbindungsaufbaus bekannt, bei dem ein OpenFlow-Switch eine Nachricht mit einer Parameteranforderung an einen Konfigurationsserver sendet, um Verbindungsparameter von einem OpenFlow-Controller zu erhalten. Auf die Nachricht mit der Parameteranforderung empfängt der OpenFlow-Switch eine IP-Adresse und einen Satz von OpenFlow-Verbindungsparametern vom Konfigurationsserver, wobei der Satz von OpenFlow-Verbindungsparametern zumindest Verbindungsparameter eines ersten OpenFlow-Controllers umfasst. Der OpenFlow-Switch sendet entsprechend der IP-Adresse und dem Satz von OpenFlow-Verbindungsparametern des ersten OpenFlow-Controllers eine Nachricht mit einer Anforderung eines Verbindungsaufbaus an den ersten OpenFlow-Controller. Auf diese Weise kann ein automatischer Verbindungsaufbau zwischen einem OpenFlow-Switch und einem OpenFlow-Controller realisiert werden.

In WO 2014/108178 A1 ist ein Verfahren zur Verbindung eines bootenden Switchs mit einem Kommunikationsnetz mittels einer zentralen Steuerungseinheit beschrieben, wobei das Kommunikationsnetz eine Vielzahl von Switchen umfasst, die durch die zentrale Steuerungseinheit gesteuert werden. Zur Steuerung der Switche übermittelt die zentrale Steuerungseinheit Datenpakete mit Steuerungsinformationen für die Switche über dieselben Kommunikationspfade wie Datenpakete mit Nutzdaten. Die Switche umfassen jeweils eine Pipeline, in der Weiterleitungsregeln für Datenpakete gespeichert sind und auf die über einen lokalen Switch-Port zugegriffen werden kann. Die Kommunikationspfade für die Datenpakete mit Steuerungsinformationen werden eingerichtet, indem durch die zentrale Steuerungseinheit vorgegebene Weiterleitungsregeln in den Pipelines der Switche gespeichert werden. Zumindest einer der Switche weist einen ausgewählten Port auf, über den der bootende Switch mit dem Kommunikationsnetz verbunden ist. Zur Speicherung von Weiterleitungsregeln im bootenden Switch durch die zentrale Steuerungseinheit wird ein temporärer Kommunikationspfad genutzt, der einen Kommunikationspfad zwischen dem ausgewählten Port und der zentralen Steuerungseinheit sowie einen Kommunikationspfad zwischen dem ausgewählten Port und einem lokalen Port des bootenden Switchs umfasst. Dieser temporäre Kommunikationspfad ermöglicht einen Zugriff auf die Pipeline des bootenden Switchs.

WO 2015/096761 A1 beschreibt eine datenverkehrsorientierte dynamische Zonenbildung für Software Defined Networking (SDN), bei der eine Netzkomponente Steuerungsinformationen von einem SDN-Controller aus einer Mehrzahl von SDN-Controllern empfängt. Die Netzkomponente ermittelt verfügbare Verkehrsplanungszonen und wählt für jede ermittelte Verkehrsplanungszone einen lokalen Zonen-Controller aus. Anhand der Steuerungsinformationen und eines Zonenbildungsschemas wird ein Master-Zonen-Controller ausgewählt, wobei der Master-Zonen-Controller und die lokalen Zonen-Controller aus den SDN-Controllern ausgewählt werden. Darüber hinaus übermittelt die Netzkomponente Angaben zu lokalen Zonen-Controllern, Zonen-Mitgliedschaft und Master-Zonen-Controller an zumindest einige der SDN-Controller.

Dokument US2015139238 A1 zeigt ein Verfahren zur Isolierung zwischen Tenants-Mietern mithilfe von Software-Defined-Networking, bei der SDN-Steuerungseinheiten jeweils unterschiedliche Slices in einer Datenebene steuern.

Um für Software Defined Networking eine skalierbare und ausfallgesicherte Control Plane zu schaffen, erfolgt eine Verteilung von SDN-Controller-Funktionen auf mehrere Controller-Instanzen. Dabei müssen die einzelnen Controller-Instanzen jeweils Zugriff auf aktuelle Systemzustandsinformationen haben, Controller-Funktionen zu erfüllen, zu denen beispielsweise Pfadermittlung, Datenpaketuntersuchung und -filterung oder Anwendung von Kommunikationsnetz-Policies bzw. -Richtlinien zählen. Insbesondere müssen die in den einzelnen Controller-Instanzen für Steuerungsaufgaben genutzten Systemzustandsinformationen hinreichend konsistent zueinander sein und dementsprechend zwischen den Controller-Instanzen synchronisiert werden. Anderseits dürfen diese Konsistenzanforderungen bei wachsender Anzahl an Controller-Instanzen zu einem letztlich nicht mehr beherrschbaren bzw. unangemessen hohen Synchronisierungsaufwand führen.

Der vorliegenden Erfindung liegt die Aufgabe zugrunde, ein effizientes und zuverlässiges Verfahren zum Betrieb eines mehrere Kommunikationsgeräte umfassenden Kommunikationsnetzes eines industriellen Automatisierungssystems anzugeben, bei dem mehrere Steuerungseinheiten jeweils Funktionen mehrerer zugeordneter Kommunikationsgeräte steuern, sowie eine entsprechende Steuerungseinheit anzugeben.

Diese Aufgabe wird erfindungsgemäß durch ein Verfahren mit den in Anspruch 1 genannten Merkmalen und durch eine Steuerungseinheit mit den in Anspruch 14 angegebenen Merkmalen gelöst. Vorteilhafte Weiterbildungen der vorliegenden Erfindung sind in den abhängigen Patentansprüchen angegeben.

Entsprechend dem erfindungsgemäßen Verfahren zum Betrieb eines mehrere Kommunikationsgeräte umfassenden Kommunikationsnetzes eines industriellen Automatisierungssystems steuern mehrere Steuerungseinheiten jeweils Funktionen mehrerer zugeordneter Kommunikationsgeräte. Dabei wird für jede Steuerungseinheit ein vorgebbarer Anteil an Systemressourcen eines zugeordneten Kommunikationsgeräts für eine vorgebbare Ressourcennutzungsdauer verfügbar gemacht. Die Steuerungseinheiten ermitteln insbesondere während der Ressourcennutzungsdauer jeweils Kommunikationsnetzpfade zwischen ausgewählten Kommunikationsgeräten über zugeordnete Kommunikationsgeräte anhand eines Gütemaßes unter Berücksichtigung jeweiliger verfügbarer Systemressourcen und steuern Routing- oder Switching-Funktionen der zugeordneten Kommunikationsgeräte entsprechend den ermittelten Kommunikationsnetzpfaden. Vorzugsweise sind die Kommunikationsgeräte einem Software Defined Network zugeordnet, das eine als Control Plane bezeichnete Kommunikationssteuerungsebene und eine als Data Plane bezeichnete Datenübermittlungsebene umfasst. Dabei sind die Steuerungseinheiten der Control Plane zugeordnet, während die Kommunikationsgeräte der Data Plane zugeordnet sind. Insbesondere können die Kommunikationsgeräte Router bzw. Switches umfassen, wobei durch die Steuerungseinheiten beispielsweise Flow-Tabellen vorgebbar sind, aus denen Routing-Tabellen bzw. Forwarding-Tabellen für der jeweiligen Steuerungseinheit zugeordnete Kommunikationsgeräte abgeleitet werden. Erfindungsgemäß erfassen die Steuerungseinheiten Zustandsgrößen der Kommunikationsgeräte synchron bei Eintritt vorgebbarer Synchronisierungsereignisse und gleichen diese untereinander ab. Dabei umfassen die Synchronisierungsereignisse vorgebbare Synchronisierungsintervalle, und die Ressourcennutzungsdauer wird durch aufeinander folgende Synchronisierungsereignisse begrenzt. Die Synchronisierungsereignisse werden vorteilhafterweise Ressourcen- bzw. Ressourcentyp-individuell definiert, wobei Port-Bandbreite, Queue-Buffer, DHCP-Adressbereiche, VLAN-Identifikatoren, Routing-Tabellen- bzw. Forwarding-Tabellen-Einträge Beispiele für Ressourcentypen sind. Die Steuerungseinheiten ermitteln erfindungsgemäß für zumindest eine vergangene Ressourcennutzungsdauer, welche Gütemaßänderungen sich für zu ermittelnde Kommunikationsnetzpfade in Abhängigkeit von einer für eine Pfadermittlung verfügbaren Ermittlungszeit ergeben, und ermitteln anhand der Gütemaßänderungen einen ersten Korrekturwert für die Synchronisierungsereignisse. Als Gütemaß zur Ermittlung der Kommunikationsnetzpfade durch die Steuerungseinheiten werden beispielsweise Pfadkosten angesetzt. Die Steuerungseinheiten ermitteln erfindungsgemäß bei einem Abgleich der Zustandsgrößen untereinander inkonsistente Zustandsgrößen und in Abhängigkeit inkonsistenter Zustandsgrößen einen zweiten Korrekturwert für die Synchronisierungsereignisse. Anhand des ersten und des zweiten Korrekturwerts werden veränderte Synchronisierungsereignisse für die Steuerungseinheiten vorgegeben.

Entsprechend einer bevorzugten Ausgestaltung des erfindungsgemäßen Verfahrens werden die Anteile an Systemressourcen der Kommunikationsgeräte durch Partitionierung und Zuordnung der Systemressourcen für die Steuerungseinheiten verfügbar gemacht. Dabei können die Systemressourcen den Steuerungseinheiten bei einer Inbetriebnahme des Kommunikationsnetzes gleichverteilt partitioniert zugeordnet werden. In diesem Fall wird die Partitionierung entsprechend einer jeweiligen Ressourcenausnutzung bzw. -anforderung durch die Steuerungseinheiten verändert.

Darüber hinaus können die Synchronisierungsereignisse neben Synchronisierungsintervallen Schwellwertüberschreitungen hinsichtlich einer Anzahl von erfolgreichen bzw. fehlgeschlagenen Ressourcenanforderungen durch die Steuerungseinheiten bzw. hinsichtlich einer Häufigkeit eines Vorliegens untereinander inkonsistenter Zustandsgrößen in den Steuerungseinheiten, Anforderungen von zusätzlichen Ressourcenanteilen, Freigaben von Ressourcenanteilen bzw. durch Steuerungseinheiten gemeldete Korrekturwerte für Synchronisierungsereignisse umfassen. Vorteilhafterweise wird der zweite Korrekturwert in Abhängigkeit von Häufigkeit, Ausmaß bzw. Auswirkungen inkonsistenter Zustandsgrößen ermittelt. In diesem Fall können die Auswirkungen inkonsistenter Zustandsgrößen beispielsweise zusätzliche Pfadkosten für einen Übergang zu einem konsistenten Systemzustand oder zu einem Referenz-Systemzustand, Systemausfallzeiten bzw. eine eingeschränkte Systemverfügbarkeit umfassen.

Entsprechend einer weiteren Ausgestaltung des erfindungsgemäßen Verfahrens werden der für eine Steuerungseinheit jeweils verfügbare Anteil an Systemressourcen innerhalb einer definierten Ober- und Untergrenze durch auf der Steuerungseinheit ablaufende Steuerungsprogramme entsprechend Token-Prinzip von der Steuerungseinheit angefordert. Darüber hinaus wird der für eine Steuerungseinheit jeweils verfügbare Anteil an Systemressourcen vorteilhafterweise entsprechend Transaktionskonzept durch die Steuerungseinheit an auf der Steuerungseinheit ablaufende Steuerungsprogramme bereitgestellt.

Die erfindungsgemäße Steuerungseinheit ist zur Durchführung eines Verfahrens entsprechend vorangehenden Ausführungen vorgesehen und dafür ausgestaltet und eingerichtet, Funktionen mehrerer zugeordneter Kommunikationsgeräte zu steuern. Dabei ist für die Steuerungseinheit ein vorgebbarer Anteil an Systemressourcen eines zugeordneten Kommunikationsgeräts für eine vorgebbare Ressourcennutzungsdauer verfügbar. Außerdem ist die Steuerungseinheit dafür ausgestaltet und eingerichtet, während der Ressourcennutzungsdauer Kommunikationsnetzpfade zwischen ausgewählten Kommunikationsgeräten über zugeordnete Kommunikationsgeräte anhand eines Gütemaßes unter Berücksichtigung jeweiliger verfügbarer Systemressourcen zu ermitteln und Routing- oder Switching-Funktionen der zugeordneten Kommunikationsgeräte entsprechend den ermittelten Kommunikationsnetzpfaden zu steuern.

Erfindungsgemäß ist die Steuerungseinheit dafür ausgestaltet und eingerichtet, Zustandsgrößen der Kommunikationsgeräte synchron mit anderen Steuerungseinheiten bei Eintritt vorgebbarer Synchronisierungsereignisse zu erfassen und untereinander abzugleichen. Dabei umfassen die Synchronisierungsereignisse vorgebbare Synchronisierungsintervalle, und die Ressourcennutzungsdauer ist durch aufeinander folgende Synchronisierungsereignisse begrenzt. Darüber hinaus ist die Steuerungseinheit dafür ausgestaltet und eingerichtet, für zumindest eine vergangene Ressourcennutzungsdauer zu ermitteln, welche Gütemaßänderungen sich für zu ermittelnde Kommunikationsnetzpfade in Abhängigkeit von einer für eine Pfadermittlung verfügbaren Ermittlungszeit ergeben, und anhand der Gütemaßänderungen einen ersten Korrekturwert für die Synchronisierungsereignisse zu ermitteln. Die Steuerungseinheit ist ferner dafür ausgestaltet und eingerichtet, bei einem Abgleich der Zustandsgrößen inkonsistente Zustandsgrößen und in Abhängigkeit inkonsistenter Zustandsgrößen einen zweiten Korrekturwert für die Synchronisierungsereignisse zu ermitteln und anhand des ersten und des zweiten Korrekturwerts veränderte Synchronisierungsereignisse vorzugeben.

Die vorliegende Erfindung wird nachfolgend an einem Ausführungsbeispiel anhand der Zeichnung näher erläutert. Es zeigt
- Figur 1: ein mehrere Kommunikationsgeräte und diesen zugeordnete Steuerungseinheiten umfassendes Kommunikationsnetz eines industriellen Automatisierungssystems,
- Figur 2: ein Ablaufdiagramm für eine Anpassung von Synchronisierungsereignissen für die Steuerungseinheiten des in Figur 1 dargestellten Kommunikationssystems.

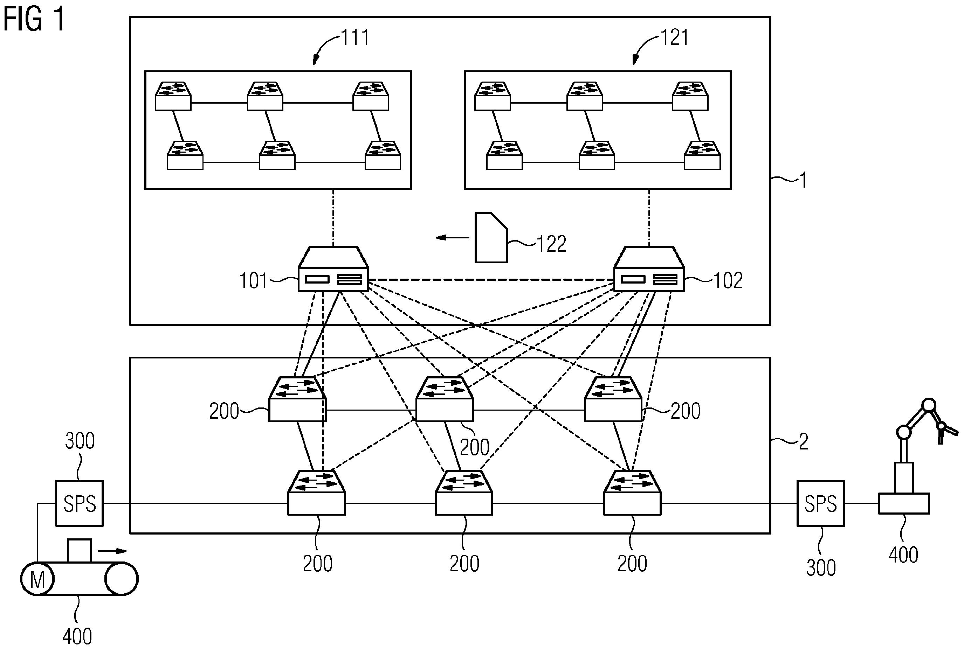

Das in Figur 1 dargestellte Kommunikationsnetz eines industriellen Automatisierungssystems umfasst mehrere Kommunikationsgeräte 200 und mehrere Steuerungseinheiten 101, 102. Die Kommunikationsgeräte 200 können beispielsweise Switche, Router oder Firewalls sein und zum Anschluss von speicherprogrammierbaren Steuerungen 300 oder Ein-/Ausgabeeinheiten des industriellen Automatisierungssystems dienen. Speicherprogrammierbare Steuerungen 300 umfassen jeweils ein Kommunikationsmodul, eine Zentraleinheit sowie zumindest eine Eingabe/Ausgabe-Einheit und stellen somit ebenfalls Kommunikationsgeräte dar. Über das Kommunikationsmodul ist eine speicherprogrammierbare Steuerung 300 beispielsweise mit einem Switch oder Router oder zusätzlich mit einem Feldbus verbunden. Die Eingabe/Ausgabe-Einheit dient einem Austausch von Steuerungs- und Messgrößen zwischen der speicherprogrammierbaren Steuerung 300 und einer durch die speicherprogrammierbare Steuerung 300 gesteuerten Maschine oder Vorrichtung 400. Die Zentraleinheit ist insbesondere für eine Ermittlung geeigneter Steuerungsgrößen aus erfassten Messgrößen vorgesehen. Obige Komponenten der speicherprogrammierbaren Steuerung 300 sind im vorliegenden Ausführungsbeispiel über ein Rückwandbus-System miteinander verbunden.

Die Kommunikationsgeräte 200 sind im vorliegenden Ausführungsbeispiel einem Software Defined Network (SDN) zugeordnet sind, das eine als Control Plane bezeichnete Kommunikationssteuerungsebene und eine als Data Plane bezeichnete Datenübermittlungsebene umfasst. Die Steuerungseinheiten 101, 102 als SDN-Controller sind der Control Plane zugeordnet, während die Kommunikationsgeräte der Data Plane zugeordnet sind. Durch die Steuerungseinheiten 101, 102 werden beispielsweise Flow-Tabellen für Switche oder Router vorgegeben, aus denen Routing-Tabellen bzw. Forwarding-Tabellen für der jeweiligen Steuerungseinheit 101, 102 zugeordnete Kommunikationsgeräte 200 abgeleitet werden.

Die Steuerungseinheiten 101, 102 sind allgemein dafür ausgestaltet und eingerichtet, Funktionen mehrerer zugeordneter Kommunikationsgeräte 200 zu steuern. Dabei ist für die Steuerungseinheiten 101, 102 jeweils ein vorgebbarer Anteil an Systemressourcen zugeordneter Kommunikationsgeräte für eine vorgebbare Ressourcennutzungsdauer verfügbar, wobei für jede Steuerungseinheit 101, 102 jeweils eine separate Ressourcensicht 111, 121 mit den Anteilen an Systemressourcen vorgesehen ist. Die Anteile an Systemressourcen der Kommunikationsgeräte werden durch Partitionierung und Zuordnung der Systemressourcen für die Steuerungseinheiten 101, 102 verfügbar gemacht. Beispielsweise können die Systemressourcen den Steuerungseinheiten 101, 102 bei einer Inbetriebnahme des Kommunikationsnetzes gleichverteilt partitioniert zugeordnet werden. Die Partitionierung wird dann entsprechend einer jeweiligen Ressourcenausnutzung bzw. -anforderung durch die Steuerungseinheiten 101, 102 verändert.

Darüber hinaus ermitteln die Steuerungseinheiten während der Ressourcennutzungsdauer jeweils Kommunikationsnetzpfade zwischen ausgewählten Kommunikationsgeräten 200 über zugeordnete Kommunikationsgeräte 200 anhand von Pfadkosten unter Berücksichtigung jeweiliger verfügbarer Systemressourcen und steuern Routing- oder Switching-Funktionen der zugeordneten Kommunikationsgeräte 200 entsprechend den ermittelten Kommunikationsnetzpfaden. Außerdem erfassen die Steuerungseinheiten 101, 102 verfügbare Zustandsgrößen der Kommunikationsgeräte 200 synchron bei Eintritt vorgebbarer Synchronisierungsereignisse und gleichen diese untereinander ab. Die Synchronisierungsereignisse umfassen vorgebbare Synchronisierungsintervalle, wobei die Ressourcennutzungsdauer durch aufeinander folgende Synchronisierungsereignisse begrenzt wird. Die Synchronisierungsereignisse werden vorzugsweise Ressourcen- bzw. Ressourcentyp-individuell definiert, wobei beispielsweise Port-Bandbreite, Queue-Buffer, DHCP-Adressbereiche, VLAN-Identifikatoren, Routing-Tabellen- bzw. Forwarding-Tabellen-Einträge Ressourcentypen darstellen. Die Synchronisierungsereignisse umfassen im vorliegenden Ausführungsbeispiel neben Synchronisierungsintervallen
- Schwellwertüberschreitungen
   - hinsichtlich einer Anzahl von erfolgreichen bzw. fehlgeschlagenen Ressourcenanforderungen durch die Steuerungseinheiten bzw.
   - hinsichtlich einer Häufigkeit eines Vorliegens untereinander inkonsistenter Zustandsgrößen in den Steuerungseinheiten,
- Anforderungen von zusätzlichen Ressourcenanteilen,
- Freigaben von Ressourcenanteilen bzw.
- durch andere Steuerungseinheiten 300 gemeldete Korrekturwerte für Synchronisierungsereignisse.

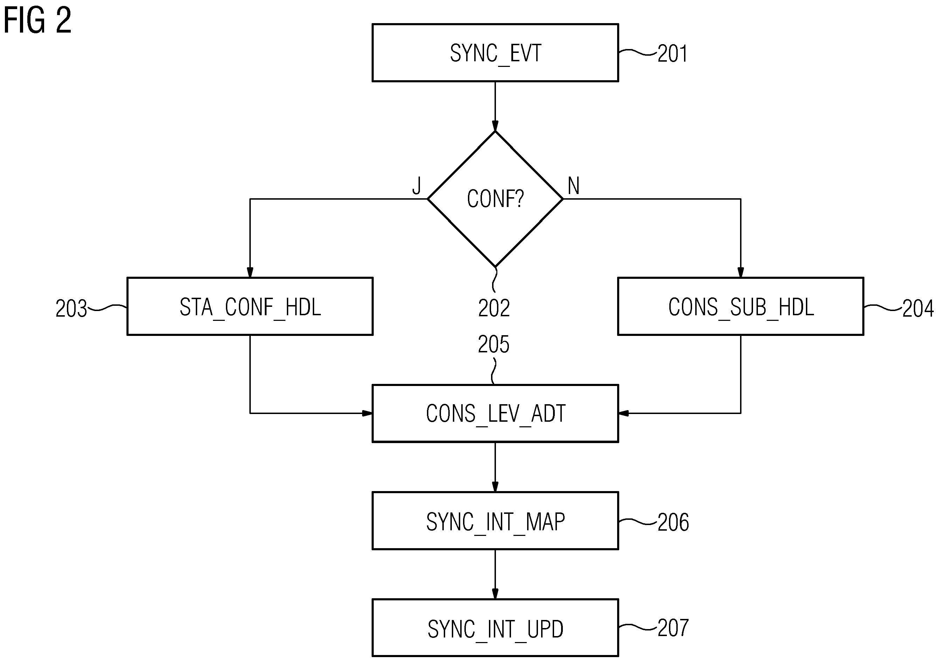

Entsprechend dem in Figur 2 dargestellten Ablaufdiagramm für eine Anpassung von Synchronisierungsereignissen für die Steuerungseinheiten 101, 102 wird auf eine entsprechend Schritt 201 durch eine Steuerungseinheit 101 von einer anderen Steuerungseinheit 102 empfangene Meldung 122 eines Synchronisierungsereignisses überprüft, ob ein Konsistenz-Konflikt zwischen in Datenbanken der Steuerungseinheiten 101, 102 erfassten Zustandsgrößen vorliegt (Schritt 202). Fall kein Konsistenz-Konflikt vorliegt, ermittelt die jeweilige Steuerungseinheit 101 für eine Historie vergangener Ressourcennutzungsdauer, welche Pfadkostenänderungen sich für zu ermittelnde Kommunikationsnetzpfade in Abhängigkeit von einer für eine Pfadermittlung verfügbaren Ermittlungszeit ergeben (Schritt 204), wobei die Ermittlungszeit durch das jeweilige Synchronisierungsintervall begrenzt ist. Anhand der Pfadkostenänderungen wird durch eine auf der jeweiligen Steuerungseinheit 101 ablaufende SDN-Applikation ein erster Korrekturwert für die Synchronisierungsereignisse ermittelt, der Kosten Cₛ für ein suboptimal gewähltes Synchronisierungsintervall widerspiegelt. Hohe Kosten Cₛ für ein suboptimal gewähltes Synchronisierungsintervall zeigen an, dass keine angemessenen Genauigkeitsverbesserungen für eine Pfadkostenermittlung durch eine längere zur Verfügung stehende Ermittlungszeit zur Durchführung der Pfadkostenermittlung zu erwarten sind.

Liegt entsprechend Schritt 202 ein Konsistenz-Konflikt vor, ermittelt die auf der jeweiligen Steuerungseinheit 101 ablaufende SDN-Applikation in Abhängigkeit inkonsistenter Zustandsgrößen einen zweiten Korrekturwert für die Synchronisierungsereignisse, der Kosten C_{c} für eine Konfliktauflösung widerspiegelt. Insbesondere wird der zweite Korrekturwert in Abhängigkeit von Häufigkeit, Ausmaß bzw. Auswirkungen inkonsistenter Zustandsgrößen ermittelt. Dabei umfassen die Auswirkungen inkonsistenter Zustandsgrößen
- zusätzliche Pfadkosten für einen Übergang zu einem konsistenten Systemzustand oder zu einem Referenz-Systemzustand,
- Systemausfallzeiten bzw.
- eine eingeschränkte Systemverfügbarkeit.

Anhand des entsprechend Schritt 204 ermittelten ersten Korrekturwerts und anhand des entsprechend Schritt 203 ermittelten zweiten Korrekturwerts bzw. auf Grundlage der Kosten Cₛ für suboptimal gewählte Synchronisierungsintervalle und der Kosten C_{c} für Konfliktauflösung werden durch die auf der jeweiligen Steuerungseinheit 101 ablaufende SDN-Applikation veränderte Synchronisierungsereignisse bzw. -intervalle für die Steuerungseinheiten vorgegeben, und zwar zunächst in Form eines adaptierten Konsistenz-Levels (Schritt 205). Dieses adaptierte Konsistenz-Level wird dann entsprechend Schritt 205 auf ein neues bzw. aktualisiertes Synchronisierungsintervall abgebildet, innerhalb dessen die jeweiligen Steuerungseinheiten 101, 102 Funktionen zugeordneter Kommunikationsgeräte 200 auf Basis lokal verfügbarer Zustandsgrößen steuern. Abschließend wird das neue bzw. aktualisierte Synchronisierungsintervall entsprechend Schritt 207 an alle zu involvierenden Steuerungseinheiten zur Übernahme weitergeleitet.

Der für eine Steuerungseinheit 101, 102 jeweils verfügbare Anteil an Systemressourcen kann innerhalb einer definierten Ober- und Untergrenze durch auf der Steuerungseinheit ablaufende SDN-Applikationen entsprechend Token-Prinzip von der Steuerungseinheit angefordert werden. Entsprechend einer bevorzugten Ausführungsform wird der für eine Steuerungseinheit jeweils verfügbare Anteil an Systemressourcen entsprechend Transaktionskonzept durch die Steuerungseinheit an auf der Steuerungseinheit ablaufende SDN-Applikationen bereitgestellt.

## Patentansprüche

1. Verfahren zum Betrieb eines mehrere Kommunikationsgeräte umfassenden Kommunikationsnetzes eines industriellen Automatisierungssystems, bei dem
- mehrere Steuerungseinheiten (101, 102) jeweils Funktionen mehrerer zugeordneter Kommunikationsgeräte (200) steuern, wobei für jede Steuerungseinheit (101, 102) ein vorgebbarer Anteil an Systemressourcen eines zugeordneten Kommunikationsgeräts (200) für eine vorgebbare Ressourcennutzungsdauer verfügbar gemacht wird,
- die Steuerungseinheiten (101, 102) während der Ressourcennutzungsdauer jeweils Kommunikationsnetzpfade zwischen ausgewählten Kommunikationsgeräten (200) über zugeordnete Kommunikationsgeräte (200) anhand eines Gütemaßes unter Berücksichtigung jeweiliger verfügbarer Systemressourcen ermitteln und Routing- oder Switching-Funktionen der zugeordneten Kommunikationsgeräte (200) entsprechend den ermittelten Kommunikationsnetzpfaden steuern,
- die Steuerungseinheiten (101, 102) Zustandsgrößen der Kommunikationsgeräte (200) synchron bei Eintritt vorgebbarer Synchronisierungsereignisse erfassen und untereinander abgleichen (201), wobei die Synchronisierungsereignisse vorgebbare Synchronisierungsintervalle umfassen und die Ressourcennutzungsdauer durch aufeinander folgende Synchronisierungsereignisse begrenzt wird,
- die Steuerungseinheiten (101, 102) für zumindest eine vergangene Ressourcennutzungsdauer ermitteln (204), welche Gütemaßänderungen sich für zu ermittelnde Kommunikationsnetzpfade in Abhängigkeit von einer für eine Pfadermittlung verfügbaren Ermittlungszeit ergeben, und anhand der Gütemaßänderungen einen ersten Korrekturwert für die Synchronisierungsereignisse ermitteln,
- die Steuerungseinheiten bei einem Abgleich der Zustandsgrößen untereinander inkonsistente Zustandsgrößen und in Abhängigkeit inkonsistenter Zustandsgrößen einen zweiten Korrekturwert für die Synchronisierungsereignisse ermitteln (203),
- anhand des ersten und des zweiten Korrekturwerts veränderte Synchronisierungsereignisse für die Steuerungseinheiten vorgegeben werden (205).

2. Verfahren nach Anspruch 1,
bei dem die Kommunikationsgeräte einem Software Defined Network zugeordnet sind, das eine als Control Plane bezeichnete Kommunikationssteuerungsebene (1) und eine als Data Plane bezeichnete Datenübermittlungsebene (2) umfasst, bei dem die Steuerungseinheiten (101, 102) der Control Plane zugeordnet sind und bei dem die Kommunikationsgeräte (200) der Data Plane zugeordnet sind.

3. Verfahren nach Anspruch 2,
bei dem die Kommunikationsgeräte Router und/oder Switches umfassen und bei dem durch die Steuerungseinheiten Flow-Tabellen vorgebbar sind, aus denen Routing-Tabellen und/oder Forwarding-Tabellen für der jeweiligen Steuerungseinheit zugeordnete Kommunikationsgeräte abgeleitet werden.

4. Verfahren nach einem der Ansprüche 1 bis 3,
bei dem die Anteile an Systemressourcen der Kommunikationsgeräte durch Partitionierung und Zuordnung der Systemressourcen für die Steuerungseinheiten verfügbar gemacht werden.

5. Verfahren nach Anspruch 4,
bei dem die Systemressourcen den Steuerungseinheiten bei einer Inbetriebnahme des Kommunikationsnetzes gleichverteilt partitioniert zugeordnet werden und bei dem die Partitionierung entsprechend einer jeweiligen Ressourcenausnutzung und/oder -anforderung durch die Steuerungseinheiten verändert wird.

6. Verfahren nach einem der Ansprüche 1 bis 5,
bei dem die Synchronisierungsereignisse neben Synchronisierungsintervallen Schwellwertüberschreitungen hinsichtlich einer Anzahl von erfolgreichen und/oder fehlgeschlagenen Ressourcenanforderungen durch die Steuerungseinheiten und/oder hinsichtlich einer Häufigkeit eines Vorliegens untereinander inkonsistenter Zustandsgrößen in den Steuerungseinheiten, Anforderungen von zusätzlichen Ressourcenanteilen, Freigaben von Ressourcenanteilen und/oder durch Steuerungseinheiten gemeldete Korrekturwerte für Synchronisierungsereignisse umfassen.

7. Verfahren nach einem der Ansprüche 1 bis 6,
bei dem die Synchronisierungsereignisse Ressourcen- und/oder Ressourcentyp-individuell definiert werden.

8. Verfahren nach Anspruch 7,
bei dem Port-Bandbreite, Queue-Buffer, DHCP-Adressbereiche, VLAN-Identifikatoren, Routing-Tabellen- und/oder Forwarding-Tabellen-Einträge Ressourcentypen sind.

9. Verfahren nach einem der Ansprüche 1 bis 8,
bei dem als Gütemaß zur Ermittlung der Kommunikationsnetzpfade durch die Steuerungseinheiten Pfadkosten angesetzt werden.

10. Verfahren nach einem der Ansprüche 1 bis 9,
bei dem der zweite Korrekturwert in Abhängigkeit von Häufigkeit, Ausmaß und/oder Auswirkungen inkonsistenter Zustandsgrößen ermittelt wird.

11. Verfahren nach Anspruch 10,
bei dem die Auswirkungen inkonsistenter Zustandsgrößen zusätzliche Pfadkosten für einen Übergang zu einem konsistenten Systemzustand oder zu einem Referenz-Systemzustand, Systemausfallzeiten und/oder eine eingeschränkte Systemverfügbarkeit umfassen.

12. Verfahren nach einem der Ansprüche 1 bis 11,
bei dem der für eine Steuerungseinheit jeweils verfügbare Anteil an Systemressourcen innerhalb einer definierten Ober- und Untergrenze durch auf der Steuerungseinheit ablaufende Steuerungsprogramme entsprechend Token-Prinzip von der Steuerungseinheit angefordert werden.

13. Verfahren nach einem der Ansprüche 1 bis 12,
bei dem der für eine Steuerungseinheit jeweils verfügbare Anteil an Systemressourcen entsprechend Transaktionskonzept durch die Steuerungseinheit an auf der Steuerungseinheit ablaufende Steuerungsprogramme bereitgestellt wird.

14. Steuerungseinheit zur Durchführung eines Verfahrens nach einem der Ansprüche 1 bis 13, die dafür ausgestaltet und eingerichtet ist,
- Funktionen mehrerer zugeordneter Kommunikationsgeräte zu steuern, wobei für die Steuerungseinheit ein vorgebbarer Anteil an Systemressourcen eines zugeordneten Kommunikationsgeräts für eine vorgebbare Ressourcennutzungsdauer verfügbar ist,
- während der Ressourcennutzungsdauer Kommunikationsnetzpfade zwischen ausgewählten Kommunikationsgeräten über zugeordnete Kommunikationsgeräte anhand eines Gütemaßes unter Berücksichtigung jeweiliger verfügbarer Systemressourcen zu ermitteln und Routing- oder Switching-Funktionen der zugeordneten Kommunikationsgeräte entsprechend den ermittelten Kommunikationsnetzpfaden zu steuern,
- Zustandsgrößen der Kommunikationsgeräte synchron mit anderen Steuerungseinheiten bei Eintritt vorgebbarer Synchronisierungsereignisse zu erfassen und untereinander abzugleichen, wobei die Synchronisierungsereignisse vorgebbare Synchronisierungsintervalle umfassen und die Ressourcennutzungsdauer durch aufeinander folgende Synchronisierungsereignisse begrenzt ist,
- für zumindest eine vergangene Ressourcennutzungsdauer zu ermitteln, welche Gütemaßänderungen sich für zu ermittelnde Kommunikationsnetzpfade in Abhängigkeit von einer für eine Pfadermittlung verfügbaren Ermittlungszeit ergeben, und anhand der Gütemaßänderungen einen ersten Korrekturwert für die Synchronisierungsereignisse zu ermitteln,
- bei einem Abgleich der Zustandsgrößen inkonsistente Zustandsgrößen und in Abhängigkeit inkonsistenter Zustandsgrößen einen zweiten Korrekturwert für die Synchronisierungsereignisse zu ermitteln,
- anhand des ersten und des zweiten Korrekturwerts veränderte Synchronisierungsereignisse vorzugeben.

## Claims

1. Method for operating an industrial automation system communication network comprising a plurality of communication devices, in which
- a plurality of control units (101, 102) each control functions of a plurality of associated communication devices (200), wherein a predefinable share of system resources of an associated communication device (200) is made available for each control unit (101, 102) for a predefinable resource usage duration,
- during the resource usage duration, the control units (101, 102) each determine communication network paths between selected communication devices (200) via associated communication devices (200) on the basis of a quality measure taking into account respective available system resources and control routing or switching functions of the associated communication devices (200) according to the communication network paths which have been determined,
- the control units (101, 102) synchronously capture state variables of the communication devices (200) when predefinable synchronization events occur and compare (201) said state variables with one another, wherein the synchronization events comprise predefinable synchronization intervals and the resource usage duration is limited by successive synchronization events,
- the control units (101, 102) determine (204), for at least one past resource usage duration, which quality measure changes result for communication network paths to be determined on the basis of a determination time available for path determination and determine a first correction value for the synchronization events on the basis of the quality measure changes,
- the control units determine (203) inconsistent state variables when comparing the state variables with one another and determine (203) a second correction value for the synchronization events on the basis of inconsistent state variables,
- changed synchronization events are specified (205) for the control units on the basis of the first and second correction values.

2. Method according to Claim 1,
in which the communication devices are assigned to a software defined network comprising a communication control plane (1) referred to as a control plane and a data transmission plane (2) referred to as a data plane, in which the control units (101, 102) are assigned to the control plane and in which the communication devices (200) are assigned to the data plane.

3. Method according to Claim 2,
in which the communication devices comprise routers and/or switches, and in which the control units can predefine flow tables from which routing tables and/or forwarding tables for communication devices assigned to the respective control unit are derived.

4. Method according to one of Claims 1 to 3,
in which the shares of system resources of the communication devices are made available for the control units by partitioning and assigning the system resources.

5. Method according to Claim 4,
in which the system resources are assigned to the control units in a partitioned and evenly distributed manner when the communication network is started up, and in which the partitioning is changed in accordance with a respective resource use and/or request by the control units.

6. Method according to one of Claims 1 to 5,
in which the synchronization events comprise, in addition to synchronization intervals, threshold value exceedances with respect to a number of successful and/or failed resource requests by the control units and/or with respect to a frequency of mutually inconsistent state variables in the control units, requests for additional resource shares, releases of resource shares and/or correction values for synchronization events which are reported by control units.

7. Method according to one of Claims 1 to 6,
in which the synchronization events are defined in a resource-specific and/or resource-type-specific manner.

8. Method according to Claim 7,
in which port bandwidth, queue buffers, DHCP address ranges, VLAN identifiers, routing table entries and/or forwarding table entries are resource types.

9. Method according to one of Claims 1 to 8,
in which path costs are prepared as a quality measure for determining the communication network paths by the control units.

10. Method according to one of Claims 1 to 9,
in which the second correction value is determined on the basis of the frequency, extent and/or effects of inconsistent state variables.

11. Method according to Claim 10,
in which the effects of inconsistent state variables comprise additional path costs for a transition to a consistent system state or to a reference system state, system downtimes and/or a restricted system availability.

12. Method according to one of Claims 1 to 11,
in which the share of system resources respectively available for a control unit within a defined upper limit and lower limit is requested by the control unit by means of control programs running on the control unit according to the token principle.

13. Method according to one of Claims 1 to 12,
in which the share of system resources respectively available for a control unit is provided by the control unit according to a transaction concept in control programs running on the control unit.

14. Control unit for carrying out a method according to one of Claims 1 to 13, which is configured and set up
- to control functions of a plurality of associated communication devices, wherein a predefinable share of system resources of an associated communication device is available for the control unit for a predefinable resource usage duration,
- to determine, during the resource usage duration, communication network paths between selected communication devices via associated communication devices on the basis of a quality measure taking into account respective available system resources and to control routing or switching functions of the associated communication devices according to the communication network paths which have been determined,
- to capture state variables of the communication devices in sync with other control units when predefinable synchronization events occur and to compare said state variables with one another, wherein the synchronization events comprise predefinable synchronization intervals and the resource usage duration is limited by successive synchronization events,
- to determine, for at least one past resource usage duration, which quality measure changes result for communication network paths to be determined on the basis of a determination time available for path determination and to determine a first correction value for the synchronization events on the basis of the quality measure changes,
- to determine inconsistent state variables when comparing the state variables and to determine a second correction value for the synchronization events on the basis of inconsistent state variables,
- to specify changed synchronization events on the basis of the first and second correction values.

## Revendications

1. Procédé pour faire fonctionner un réseau de communication, comprenant plusieurs appareils de communication, d'un système d'automatisation industriel, dans lequel
- plusieurs unités (101, 102) de commande commandent chacune des fonctions de plusieurs appareils (200) de communication associés, dans lequel, pour chaque unité (101, 102) de commande, on rend disponible, pendant une durée d'utilisation de ressources pouvant être donnée à l'avance, une proportion pouvant être donnée à l'avance de ressources de système d'un appareil (200) de communication associé,
- les unités (101, 102) de commande déterminent, pendant la durée d'utilisation des ressources, respectivement des trajets de réseau de communication entre des appareils (200) de communication sélectionnés, en passant par des appareils (200) de communication associés, à l'aide d'une mesure de qualité, en tenant compte des ressources de système disponibles, respectivement, et commandent des fonctions de routing ou de switching des appareils (200) de communication associés, conformément aux trajets de réseau de communication déterminés,
- les unités (101, 102) de commande saisissent des grandeurs d'état des appareils (200) de communication en synchronisme avec l'apparition d'événements de synchronisation pouvant être donnés à l'avance et les équilibres (201) entre elles, les événements de synchronisation comprenant des intervalles de synchronisation pouvant être donnés à l'avance et la durée d'utilisation des ressources étant limitée par des événements de synchronisation se succédant,
- les unités (101, 102) de commande déterminant, pendant au moins une durée d'utilisation des ressources passée, les modifications de valeur de qualité qui se sont produites pour des trajets de réseau de communication à déterminer en fonction d'un temps de détermination disponible pour une détermination de trajet et, à l'aide des modifications de valeur de qualité, déterminent une première valeur de correction pour les événements de synchronisation,
- les unités de commande déterminent, lors d'un équilibrage des grandeurs d'état entre elles, des grandeurs d'état inconsistantes et, en fonction des grandeurs d'état inconsistantes, déterminent (203) une deuxième valeur de correction pour les événements de synchronisation,
- on prescrit (205) aux unités de commande des événements de synchronisation modifiés à l'aide de la première et de la deuxième valeur de correction.

2. Procédé suivant la revendication 1,
dans lequel les appareils de communication sont associés à un software defined network, qui comprend un plan (1) de commande de communication désigné par control plane et un plan (2) de transmission de données désigné par data plane, dans lequel les unités (101, 102) de commande sont associées au control plane et dans lequel les appareils (200) de communication sont associés au data plane.

3. Procédé suivant la revendication 2,
dans lequel les appareils de communication comprennent des routeurs et/ou des switches et dans lequel il peut être prescrit par les unités de commande des tables de flux à partir desquelles sont déduites des tables de routing et/ou des tables de forwarding pour les appareils de communication associés à l'unité de commande respective.

4. Procédé suivant l'une des revendications 1 à 3,
dans lequel on rend disponible aux unités de commande les proportions de ressources du système des appareils de communication en partitionnant et en associant les ressources de système.

5. Procédé suivant la revendication 4,
dans lequel on associe, en les partitionnant de manière répartie également, les ressources de système entre les unités de commande, lors de la mise en service du réseau de communication, et dans lequel on modifie le partitionnement par les unités de commande, en fonction d'une utilisation et/ou d'une demande respective de ressources.

6. Procédé suivant l'une des revendications 1 à 5,
dans lequel les événements de synchronisation comprennent, outre des intervalles de synchronisation, des dépassements de valeur de seuil en ce qui concerne un certain nombre de demandes de ressources couronnées de succès et/ou ayant échoué par les unités de commandes et/ou en ce qui concerne une fréquence d'une présence de grandeurs d'état inconsistantes entre elles dans les unités de commande, des demandes de proportions de ressources supplémentaires, des validations de proportions de ressources et/ou des valeurs de correction, annoncées par les unités de commande, d'événements de synchronisation.

7. Procédé suivant l'une des revendications 1 à 6,
dans lequel on définit les événements de synchronisation individuellement aux ressources et/ou au type de ressources.

8. Procédé suivant la revendication 7,
dans lequel des largeurs de bande d'accès, des queues buffer, des zones d'adresse DHCP, des identifiants VLAN, et/ou des entrées dans des tables de routing et/ou des tables de forwarding sont des types de ressources.

9. Procédé suivant l'une des revendications 1 à 8,
dans lequel, comme valeurs de qualité pour la détermination des trajets de réseau de communication, on fixe des coûts de trajet par les unités de commande.

10. Procédé suivant l'une des revendications 1 à 9,
dans lequel on détermine la deuxième valeur de correction en fonction de la fréquence, du degré et/ou des effets de grandeurs d'état inconsistantes.

11. Procédé suivant la revendication 10,
dans lequel les effets de grandeurs d'état inconsistantes comprennent des coûts de trajet supplémentaires pour un passage à un état de système consistant ou à un état de système de référence, des temps de défaillance de système et/ou une disponibilité limitée du système.

12. Procédé suivant l'une des revendications 1 à 11,
dans lequel la proportion, pouvant être mise à disposition, respectivement, d'une unité de commande, de ressources du système est, dans une limite supérieure ou inférieure définie, demandée par l'unité de commande par des programmes de commande se déroulant sur l'unité de commande, conformément au principe token.

13. Procédé suivant l'une des revendications 1 à 12,
dans lequel la proportion pouvant être mise à disposition, respectivement, d'une unité de commande de ressources du système, est mise à disposition conformément au concept transaction par l'unité de commande sur des programmes de commande se déroulant sur l'unité de commande.

14. Unité de commande pour effectuer un procédé suivant l'une des revendications 1 à 13, qui est conformée et conçue pour
- commander des fonctions de plusieurs appareils de communication associés, dans laquelle il peut être mis à disposition de l'unité de commande une proportion pouvant être donnée à l'avance de ressources du système d'un appareil de communication associé pendant une durée d'utilisation de ressources pouvant être donnée à l'avance,
- pendant la durée d'utilisation de ressources, pour déterminer des trajets de réseau de communication entre des appareils de communication sélectionnés par des appareils de communication associés à l'aide d'une valeur de qualité, en tenant compte des ressources de système disponibles respectivement et pour commander des fonctions de routing ou de switching des appareils de communication associés conformément aux trajets du réseau de communication, qui ont été déterminés,
- déterminer et équilibrer entre elles des grandeurs d'état des appareils de communication en synchronisme avec d'autres unités de commande à l'apparition d'évènements de synchronisation pouvant être donnés à l'avance, les événements de synchronisation comprenant des intervalles de synchronisation pouvant être donnés à l'avance et la durée d'utilisation de ressources étant limitée par des événements de synchronisation qui se succèdent,
- pour déterminer, pour au moins une durée d'utilisation de ressources passée, les modifications de valeur de qualité qui se sont produites pour des trajets de réseau de communication à déterminer en fonction d'un temps de détermination disponible pour une détermination de trajet et, à l'aide des modifications de valeur de qualité, pour déterminer une première valeur de correction pour les événements de synchronisation,
- pour déterminer, lors d'un équilibrage des grandeurs d'état, des grandeurs d'état inconsistantes et pour déterminer, en fonction de grandeurs d'état inconsistantes, une deuxième valeur de correction des événements de synchronisation,
- pour prescrire des événements de synchronisation modifiés à l'aide de la première et de la deuxième valeur de correction.
